Europäisches Patentamt

(19) European Patent Office

Office européen des brevets

(11) Veröffentlichungsnummer : **0 137 054**
**B1**

(12) **EUROPÄISCHE PATENTSCHRIFT**

(45) Veröffentlichungstag der Patentschrift :
27.05.87

(51) Int. Cl.⁴ : **C 04 B 14/00**, C 02 F 11/00,
G 21 F 9/16

(21) Anmeldenummer : 83109027.9

(22) Anmeldetag : 13.09.83

(54) **Verfahren zur Herstellung eines auslaugresistenten Fixierungsproduktes von schädlichen wasserhaltigen Abfällen und Zement.**

(43) Veröffentlichungstag der Anmeldung :
**17.04.85 Patentblatt 85/16**

(45) Bekanntmachung des Hinweises auf die Patenterteilung : **27.05.87 Patentblatt 87/22**

(84) Benannte Vertragsstaaten :
**BE CH DE FR GB LI NL**

(56) Entgegenhaltungen :
EP-A- 0 054 604
EP-A- 0 124 966
AT-A-   325 165
DE-A- 2 426 641
DE-A- 3 026 991
FR-A- 2 462 396
GB-A- 1 478 830
GB-A- 1 560 467
CHEMICAL ABSTRACTS, Band 91, Nr. 12, September 1979, Seite 268, Nr. 95720a, Columbus, Ohio, USA, K. KLEMENT: "Liquation and use of calcium sulfate-based neutralization sludges from the chemical polishing of glass for production of inorganic insulation plates"

(73) Patentinhaber : **Kernforschungszentrum Karlsruhe GmbH**
**Weberstrasse 5 Postfach 3640**
**D-7500 Karlsruhe 1 (DE)**

(72) Erfinder : **Vejmelka, Peter, Dr.**
**Otto-Hahn-Strasse 8**
**D-7514 Leopoldshafen (DE)**
Erfinder : **Kluger, Wolfgang**
**Nordring 5**
**D-7514 Leopoldshafen (DE)**
Erfinder : **Köster, Rainer, Dr.**
**Am Kirchberg 25**
**D-7500 Karlsruhe-Grötzingen (DE)**
Erfinder : **Hauser, Wolfgang, Dr.**
**Eschenweg 3**
**D-7513 Stutensee-Friedrichstal (DE)**

**Beschreibung**

Die Erfindung betrifft ein Verfahren zur Herstellung von gegen Wasser und Salzlösungen auslaugresistenten Fixierungsprodukten von schädlichen wasserhaltigen Abfällen und Zement mit oder ohne Zusätze (Fixierungs-Matrix), bei welchem die wasserhaltigen Abfälle durch Eindampfen konzentriert werden und mit der Fixierungs-Matrix gemischt und fixiert werden.

Fixierungsprodukte von schädlichen wasserhaltigen Abfällen und Zement mit oder ohne Zusätze, wie z. B. Metalloxide, Metallhydroxide, Silikate der Alkali- bzw. Erdalkali-Metalle oder Aluminosilikate, sind bereits seit langem bekannt (DE-B-24 26 641). Solche Fixierungsprodukte weisen jedoch entweder nur einen geringen Anteil des schädlichen Abfalls auf, beispielsweise weniger als 10 Gew.-%, bezogen auf das Trockengewicht des Abfalls im Endprodukt oder einen Wassergehalt im Endprodukt entsprechend einem Wasser-zu-Zement-Verhältnis von zum Teil weit mehr als 0,45 oder beides. Unter schädlichen, wasserhaltigen Abfällen sind wäßrige Lösungen, Schlämme oder Suspensionen von für den Biozyklus schädlichen, gefährlichen Stoffen, beispielsweise giftigen und/oder radioaktiven Stoffen, zu verstehen. Die bisher bekanntgewordenen Fixierungsprodukte dieser Art sind bei ihrer Herstellung entweder durch das Wasser-zu-Zement-Verhältnis bzw. Wasser-zu-hydraulisches Bindemittel-Verhältnis oder durch die Beladung mit dem Abfall limitiert. Ganz allgemein gilt bei der Fixierung von wasserhaltigen Abfällen in hydraulischen Bindemitteln folgendes :

Je geringer das Volumen des wasserhaltigen Abfalls im Verhältnis zu der Menge des hydraulischen Bindemittels ist, desto geringer ist der Anteil des schädlichen Abfalls im Endprodukt und desto geringer ist das Verhältnis Wasser zu hydraulischem Bindemittel (Gewichtsanteil zu Gewichtsanteil) im Endprodukt. Erhöht man das Volumen des zu fixierenden wasserhaltigen Abfalls bei gleicher Menge hydraulischen Bindemittels, so wird zwar der Trockengewichtsanteil des Abfalls im Endprodukt größer, das Gewichtsverhältnis Wasser zu hydraulischem Bindemittel wird jedoch ebenfalls angehoben, bis zu einem von der Zusammensetzung der Fixierungsmatrix abhängigen Wert, von welchem ab bei laufender Erhöhung des Volumens der zu fixierenden Flüssigkeit diese von der Fixierungs-Matrix nicht mehr aufgenommen werden kann. Die Folge ist dann entweder ein Nichterhärten der Fixierungs-Matrix oder, wenn die Fixierungs-Matrix erhärten kann, ein Überstehen von Wasser oder wäßriger Lösung nach dem Erhärten des Fixierungsprodukts. Es kann dabei nicht vorausgesagt werden, ob das Überstehende noch schädliche Abfallstoffe enthält oder nicht. Es kann daher nicht im Sinne eines Fixierungsverfahrens sein, wenn nach dem Erhärten des Fixierungsproduktes noch Überstehendes vorhanden ist.

Durch Aufkonzentrieren des wasserhaltigen Abfalls, beispielsweise durch Eindampfen von wäßrigen Salzlösungen, kann zwar die Beladung des Endprodukts mit dem schädlichen Abfall bis zu einem gewissen Betrag erhöht werden, bringt jedoch Probleme in Bezug auf die Fixierungs-Qualität mit sich. Um ausreichend hohe Abfallbeladungen zu erreichen, müßten die wäßrigen Abfälle sehr hoch aufkonzentriert werden, was dann jedoch verfahrenstechnisch nur sehr schwierig oder gar nicht zu realisieren wäre : durch beispielsweise Salzausfällung, Förderprobleme, Staubbildung durch getrocknete Substanzen etc. Beispielsweise ist die Salzbeladung der Endprodukte, die nach bekannten Verfahren hergestellt worden sind, insbesondere nach der In-Faßzementierung, durch die Salzkonzentration der Abfallösung bestimmt. Die Fixierung eines wasserhaltigen Abfalls mit einem Gehalt an schädlichen Salzen von ca. 40 Gew.-% erzeugt Fixierungsprodukte mit höchstens 16 Gew.-% Salze im Endprodukt, obwohl der Wasser-zu-Zement-Wert bei ca. 0,4 liegt.

Je höher der Wasser-Zement-Wert bzw. das Gewichtsverhältnis Wasser zu hydraulischem Bindemittel im Endprodukt wird, desto geringer wird die Auslaugresistenz der Fixierungsprodukte gegen Wasser oder Salzlösungen.

Aber auch eine gewisse mechanische Festigkeit müssen die Fixierungsprodukte aufweisen, um das gewünschte Maß an Auslaugresistenz zu besitzen. Es wird daher, insbesondere von radioaktive Stoffe enthaltenden Fixierungsprodukten eine Druckfestigkeit von 10 N/mm² oder mehr gefordert. Für schädliche Stoffe soll die Auslaugresistenz mindestens durch

eine mittlere Auslaugrate von besser als $10^{-3}$ g/cm² · Tag (über die Dauer eines Jahres gemessen)
eine differentielle Auslaugrate besser als $10^{-4}$ g/cm² · Tag (bezogen auf die Messungen am Ende des 1. Jahres) und
eine Diffusionskonstante von besser als $10^{-4}$ cm² · d$^{-1}$

gegeben sein. Nur wenn diese Bedingungen erfüllt sind, kann von auslaugresistenten Fixierungsprodukten die Rede sein.

Der Erfindung liegt die Aufgabe zugrunde, ein Verfahren zur Herstellung von gegen Wasser und Salzlösungen auslaugresistenten Fixierungsprodukten von schädlichen, wasserhaltigen Abfällen und einer Fixierungs-Matrix auf der Basis eines anorganischen hydraulischen Bindemittels bereitzustellen mit einer hohen Abfallbeladung der Produkte in Verbindung mit einem niedrigen Verhältnis Wasser zu hydraulischem Bindemittel. Die Fixierungsprodukte sollen gute mechanische Eigenschaften, eine gute Auslaugresistenz und mindestens die Fixierungsqualität der bisher bekannten Fixierungsprodukte (mit weit geringerem Gewichtsanteil an schädlichen Stoffen im Endprodukt) aufweisen. Die neuen Fixierungsprodukte sollen sowohl kontinuierlich als auch diskontinuierlich herstellbar sein und die genannten Qualitätsanforderungen, insbesondere die Druckfestigkeit und die Auslaugresistenz, mit Sicherheit gewährleisten.

Die Aufgabe wird erfindungsgemäß dadurch gelöst, daß der Eindampfvorgang und das Mischen gleichzeitig bei Temperaturen von 100 °C bis 180 °C durchgeführt werden, wobei

a) der Anteil des Abfalls im Endprodukt zwischen 20 und 50 Gew.-%, im Falle von mit Schadstoffen beladener Ionenaustauscher als Abfall zwischen 26 und 50 Gew.-%, bezogen auf das Trockengewicht des Abfalls, beträgt, und

b) der Wassergehalt im Endprodukt einem Wasser-zu-Zement-Verhältnis (Wasser-Zement-Wert) im Bereich von 0,2 bis 0,45 entspricht.

Die Dauer des Eindampfens und Mischens wird nach Maßgabe des Wassergehaltes im Endprodukt entsprechend einem Wasser-Zement-Wert von 0,2 bis 0,45 eingestellt. Das Eindampfen und Mischen kann kontinuierlich in einer Durchlauf-Misch-Vorrichtung erfolgen. Es kann aber auch diskontinuierlich in einem topfartigen Behältnis erfolgen. Erforderlichenfalls wird das Eindampfen und Mischen in Anwesenheit eines Abbindeverzögerers durchgeführt. Zusätzlich kann das Eindampfen und Mischen unter Anwendung eines Vakuums im Bereich von 2 kPa bis 50 kPa (20 mbar bis 500 mbar) erfolgen.

Die erfindungsgemäß hergestellten Produkte weisen folgenden wesentlichen Vorteil auf :

Sie sind trotz ihres hohen Abfallanteils leicht herstellbar und ihre Herstellung ist nur mit geringem Aufwand an Kosten, Raum und Arbeitszeit verbunden.

Zwar wurde auf dem Gebiete der Fixierung radioaktiver Abwässer bereits vorgeschlagen, eine Aufkonzentrierung der Abwässer durch Eindampfen, evtl. bis zur Trockne vorzunehmen und den Trockenrückstand danach mit einer Fixierungs-Matrix irgendwelcher Art zu mischen und zu verfestigen, doch bringt eine solche Verfahrensweise Probleme mit sich, da die Erhöhung der Viskosität des noch fließenden Fixierungsmittels vor dem Erhärten eine verhältnismäßig frühe Begrenzung der Abfallbeladung mit sich bringt. Wird ein solcher Trockenrückstand in Zementleim eingerührt, so wird die hohe Abfallbeladung, wie sie die erfindungsgemäßen Fixierungsprodukte aufweisen, nicht erreicht und der verhältnismäßig niedrige Wasser-Zement-Wert wird überschritten. Bei dem Bestreben, eine möglichst hohe Beladung zu erreichen, wurde auch schon dem Zementanteil eine gewisse Menge Bentonit zugesetzt, insbesondere wasseraufsaugender Bentonit, doch wurde hierdurch wiederum die Viskosität des Zementleims so erhöht, daß er nach den bekannten Verfahren nicht mehr verarbeitet werden konnte, oder daß dieser Nachteil durch erhöhten Wasserzusatz wieder ausgeglichen werden mußte.

Auch wurde die Verfestigung von Borsäureschlämmen mit 30 % bis 70 % Borsäure mit Zement vorgeschlagen (EP-A-0 124 966) mit einem Wasser-zu-Zement-Verhältnis von 0,4 bis 0,6 unter Verwendung von Dispergiermitteln, Verzögerern und gegebenenfalls Härtern, doch werden dort die Festigkeitseigenschaften der Fixierungsprodukte nicht angesprochen. Weiterhin wurde aus der FR-A-2 462 396 ein Verfahren zum Binden von Abwasser und Schlamm mit einem Feststoffgehalt von bis zu 60 Gew.-% bekannt. Die Produkteigenschaften wurden jedoch auch dort nicht erwähnt.

Ein kontinuierlich durchführbares Fixierungsverfahren, welches ein hydraulisches Bindemittel als Hauptbestandteil der Fixierungs-Matrix verwendet, ist aus der DE-A-32 02 518 bekannt. Dort sollen radioaktive und/oder giftige Stoffe enthaltende Wässer und/oder zerkleinerte radioaktive und/oder giftige Festmaterialien in eine abbindende bzw. aushärtende Bindemittelmischung eingebettet und die Mischung danach in Fässer oder Behälter abgefüllt werden. Der wesentliche Gedanke bei dem Verfahren nach der deutschen Offenlegungsschrift ist dabei, die inaktiven Stoffe, wie z. B. Zement und Sand, und die radioaktiven flüssigen Stoffe, wie z. B. Verdampferkonzentrate oder Schlämme, in einem möglichst kleinen Bereich zu mischen und danach abzufüllen. Die Anlage soll möglichst klein sein und bewirken, daß auch unter Einsparung von Bindemittel auf möglichst engem und konzentriertem Raum möglichst viel solches Material verfestigt werden kann, wobei insbesondere auch Maschinen und Maschinenteile, die radioaktive Stoffe aufweisen, einen möglichst geringen Umfang nach der Einbettung in abbindendes bzw. aushärtendes Bindemittelgemisch aufweisen sollen. Dies wird gemäß der Offenlegungsschrift dadurch erreicht, daß eine im wesentlichen trockene Bindemittelmischung in eine strahlenmäßig abgeschirmte Kammer oder dergleichen eingeführt wird, dort mit dem zu beseitigenden Stoff vermischt und zum Aushärten gebracht wird. Es sei besonders zweckmäßig, wenn die Bindemittelmischung zunächst mit radioaktivem und/oder vergiftetem Wasser versetzt und dadurch zum Aushärten angemacht wird. Hierdurch wird nicht nur radioaktives zerkleinertes Feststoffmaterial verfestigt, sondern gleichzeitig auch radioaktive Wässer. Die vorgemischten Bindemittel (Mörtelmischung), die zerkleinerten radioaktiven Feststoffe und eventuell radioaktive Ionenaustauscherharze werden jeweils mit Förderschnecken in den Durchlaufmischer eingebracht und in der Mischzone mit radioaktivem Wasser oder Schlamm mit Hilfe einer Mischpaddelschnecke gemischt. Über Verfahrensbedingungen, wie z. B. Menge und Zusammensetzung des Bindemittelgemisches, Verhältnis des Bindemittelgemisches zu radioaktivem und/oder giftigem Wasser oder dergleichen, Verhältnis Bindemittel zu radioaktivem und/oder giftigem, zerkleinertem Schreddermaterial, Verhältnis Bindemittelgemisch zu radioaktivem und/oder giftigem Ionenaustauscherharz, usw., sind in der deutschen Offenlegungsschrift keine Aussagen gemacht worden. Das dort beschriebene Verfahren arbeitet somit gemäß in solchen Fällen üblichen und allgemein bekannten Bedingungen. Erhöhte Abfallbeladungen bei gleichzeitig niedrigem Wasser-Zement-Wert können mit diesem Verfahren nicht erzielt werden.

Für das erfindungsgemäße Verfahren geeignete Fixierungs-Matrix-Materialien sind beispielsweise Zemente auf der Basis Portland-Zement, wie z. B. Portland-Zemente selbst, Hochofenzemente, Trass-Zemente, Puzzolanzemente etc., oder hydraulisch abbindende keramische Zemente, wie z. B. Tiefbohrzemente etc. Die Zemente können für sich alleine oder in irgend einem beliebigen Gemisch zweier oder mehrerer Zemente verwendet werden oder in Form von Gemischen mit Zusätzen von beispielsweise Alkali- oder Erdalkali-Silikaten, von Aluminosilikaten etc.

Unter normalen Bedingungen, wie sie beispielsweise in der Bauwirtschaft vorherrschen, wird das Abbinden und Aushärten von Zement durch Temperaturerhöhung beschleunigt. Dieser Effekt wird z. B. bei der Autoklaven-Härtung von Beton- bzw. Zementbauteilen ausgenutzt, um nach vergleichsweise geringen Aushärtezeiten (1 Tag gegenüber 1 Woche) bereits die Endfestigkeit zu erreichen. Das Abbinden erfolgt dabei in wenigen Minuten.

Überraschenderweise zeigte sich nun bei Untersuchungen zur Zementfixierung $NaNO_3$-haltiger, radioaktiver Abfallkonzentrate, daß diese im Gemisch mit Zement (PZ oder HOZ) über längere Zeit (45-60 Minuten) bei Außentemperaturen bis 180 °C behandelt werden können, ohne daß frühzeitiges Abbinden auftritt. Die Produkte erhärten nach einigen Stunden und weisen Druckfestigkeiten nach 28 Tagen auf, die mit herkömmlich hergestellten Produkten vergleichbar sind.

Dadurch besteht z. B. die Möglichkeit, in einem einzigen Verfahrensschritt (Mischen und Ausdampfen gekoppelt) Zementprodukte mit niedrigerem W/Z-Wert bzw. höherer Salzbeladung herzustellen, als dies bei der bekannten « In-Faß-Zementierung » möglich ist.

Im Vergleich zu der bekannten Verfahrenstechnik mit zweistufiger Fahrweise, Verdampfen des Wasseranteils der Abfälle und anschließendes Mischen des Trockenrückstandes mit Zementleim (getrennte Verfahrensstufen), beinhaltet das erfindungsgemäße Verfahren eine Reihe von Vorteilen.

— einstufig : kontinuierlich bzw. diskontinuierlich fahrbar

— Dosierung : Zement und (beispielsweise) MAW-Konzentrat werden im Vorlage- bzw. Reaktionskessel gemischt, d. h. einziger Feststoff der dosiert werden muß, ist Zement ; es ist kein Eindampfrückstand zu dosieren, was verfahrenstechnisch umständlicher ist durch Zusammenbacken, Verklumpen etc.

Ein wesentlicher Vorteil des erfindungsgemäßen Verfahrens besteht darin, daß die Fixierungsprodukte in einem kontinuierlichen Arbeitsschritt hergestellt werden können und die Abfallbeladung über die Zusammensetzung der Ausgangsmischung und die Ausdampfleistung des Mischers in einem weiten Bereich einstellbar ist. Ein weiterer Vorteil ist darin zu sehen, daß durch die Erhöhung der Radioaktivität in den Endlagerbehältern, die mit der höheren Abfallbeladung der Fixierungsprodukte einhergeht, ein wesentlich geringerer Aufwand betrieben werden muß, beispielsweise selbst bei den Abschirmmaterialien :

Werden z. B. Fixierungsprodukte mit dem Radionuklid Kobalt-60 in 400 l-Fässer in Stahlgußab-schirmungen verpackt, dann wird zwar mit einer Verdoppelung der Abschirmdicke eine Volumenvergrößerung des Abschirmmaterials um den Faktor 2,5 erzielt, die maximal zulässige Kobalt-60-Radioaktivität im Behälter kann jedoch dann um den Faktor 40 höher sein. Dieses Verhältnis wird mit zunehmender Aktivität immer günstiger. Für die Verfestigung von Konzentraten aus mittelradioaktiven Abfällen (MAW-Konzentrate) sind die entsprechenden Verhältnisse noch günstiger zu bewerten, da bei dem zu betrachtenden Nuklidspektrum in dem Fixierungsprodukt niederenergetischere Gammastrahler mit zu betrachten sind.

Im folgenden wird die Erfindung anhand eines vereinfachten Fließschemas und anhand von beispielhaften Fixierungen simulierter, wäßriger Abfälle näher erläutert.

## Beispiel 1

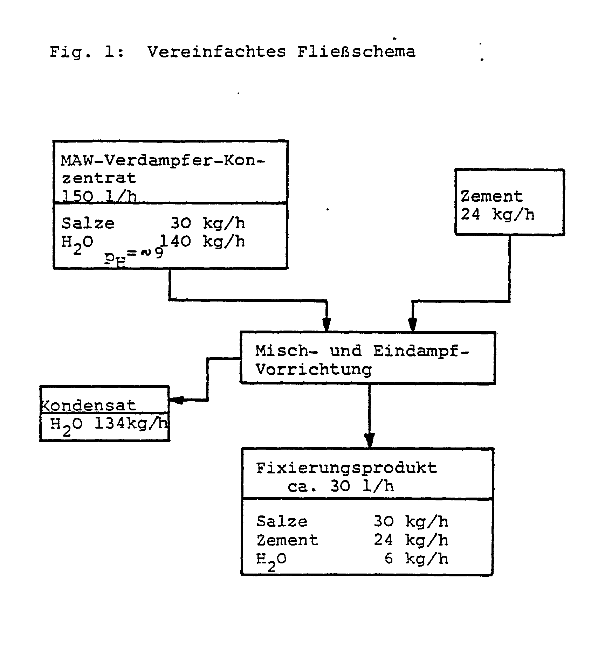

In einen heizbaren Extruder wurden, entsprechend den in Fig. 1 gemachten Angaben, eine Simulatlösung für ein mittelradioaktives Verdampferkonzentrat (MAW-Konzentrat), dessen Zusammensetzung in Tabelle 1 aufgelistet wurde, mit einem Fluß von 150 l/h und gleichzeitig Portland-Zement 35 F mit 24 kg/h eindosiert. Die Verfahrenstemperatur lag im Bereich zwischen 130 °C und 180 °C. Es wurde ein Fixierungsprodukt von ca. 30 l/h erhalten, in welchem 30 kg/h Salze, 24 kg/h Zement und 6 kg/h Wasser enthalten waren. Das Fixierungsprodukt, wurde in einen Abfallbehälter aus dem Extruder ausgetragen, worin es erhärtete. Im Fixierungsprodukt waren 50 Gew.-% Salze und der Wasser zu Zement-Wert betrug 0,25. Der während des Mischens und Eindampfens aus dem Extruder entweichende Wasserdampf ergab 134 kg/h Kondensat.

Tabelle 1 : Zusammensetzung des MAW-Simulats

| Element/Verbindung | Konz. in g/l |
| --- | --- |
| $NaNO_3$ | 300 |
| Al | 0,23 |
| Ca | 1,5 |
| Cr | 0,08 |

| | |
|---|---|
| Cu | 0,15 |
| Fe | 0,38 |
| K | 0,08 |
| Mg | 0,75 |
| Mn | 0,08 |
| Mo | 0,38 |
| Ni | 0,08 |
| Ru | 0,15 |
| Zr | 0,15 |
| Natriumoxalat | 5 |
| Natriumtartrat | 5 |
| EDTA | 1 |
| NaF | 1 |
| Tensid (Marlox FK 64) | 1 |
| Tensid (Marlophen 812) | 1 |
| Na$_2$HPO$_4$ | 5 |
| Natriumcitrat | 5 |
| Tributylphosphat (TBP) | 0,2 |
| Dibutylphosphat (DBP) | 0,2 |
| Kerosin | 0,02 |

Alle Elemente wurden in Nitratform eingesetzt mit Ausnahme von Mo, welches als Na-Molybdat verwendet wurde.

Bei inaktiven Versuchen wurden jeweils 10 g/l inaktives Cs bzw. Sr eingesetzt.

Beispiel 2

161 g Portland-Zement (PZ 35 F) wurden im Rundkolben mit 354 g NaNO$_3$-Lösung (NaNO$_3$-Gehalt 90 g) gemischt. Diese Mischung weist einen W/Z-Wert von 1,64 auf und enthält 17,5 Gew.- % Salz. Ebenso gut wie PZ sind Hochofenzement (HOZ), Traßzement (TrZ) oder Puzzolanzement verwendbar. Durch Einengen am Rotationsverdampfer bei 130-180 °C wurden 215 g H$_2$O abgedampft. Das Fixierungsprodukt mit einem W/Z-Wert von 0,3 und einem Salzgehalt von 30 Gew.- % läßt sich leicht aus dem Kolben in Prismenformen überführen (plastisches Verhalten), in denen es erhärtet.

Die Produkte wiesen nach 28 Tagen Lagerzeit (DIN) dynamische Elastizitäts-Modulwerte von 18-25 N/mm$^2$ auf, die Druckfestigkeiten betrugen 25-35 N/mm$^2$. Die mechanische Beständigkeit der Produkte mit hoher Salzbeladung und niedrigerem W/Z-Wert ist somit vergleichbar oder sogar besser als die der zum Stande der Technik gehörigen Produkte mit 10 Gew.- % Salzgehalt und W/Z-Werten von 0,4-0,45.

Der Mischung kann vor dem Eindampfen im Rotationsverdampfer beispielsweise 0,01 bis 0,2 Gew.- % eines bekannten Abbinde-Verzögerers oder eines Verflüssigers zugesetzt werden, falls die Eindampftemperatur im angegebenen Bereich niedrig bzw. die Verweilzeit im Mischer-Verdampfer höher gewählt werden sollte. Eventuell kann durch Anlegen eines Vakuums an die Apparatur die Arbeitstemperatur niedrig gehalten werden, was auch vorteilhaft zur Vermeidung eines vorzeitigen Erstarrens ist.

Das Ergebnis dieses Beispiels zeigt, daß Zementprodukte mit einem geringen W/Z-Wert (0,3) mit höherer Abfallbeladung (30 Gew.- %) als dem Stand der Technik entsprechende Produkte, mit einem kontinuierlichen Verfahren hergestellt werden können, bei dem die Mischung Zement-wäßriger Abfall mit einem hohen W/Z-Wert (> 1) angesetzt werden kann und während des Mischvorgangs durch Ausdampfen der Wassergehalt auf den gewünschten Endwert eingestellt werden kann.

Bei einem kontinuierlichen Verfahren mit einem Mischer-Verdampfer können Verweilzeiten der Mischung in der Vorrichtung von ca. 5-10 min. ohne Schwierigkeiten erreicht werden (Vergleich: Bituminierung, 3 min.), so daß mit Sicherheit unter den gewählten Bedingungen ein frühzeitiges Ansteifen und Festwerden der Mischung ausgeschlossen werden kann.

Auslaugbeständigkeit

Diffusionskoeffizient (m$^2$/s.) für Cs-137

Tabelle 2

| Produktzusammensetzung (W/Z = 0,4) | NaCl-Lsg. (bei RT.) | quinäre Lsg. (bei RT.) |
|---|---|---|
| PZ 35 F+ 10 Gew.-% NaNO$_3$ | $8,1 \cdot 10^{-13}$ | $8,5 \cdot 10^{-14}$ |
| PZ 35 F+ 10 Gew.-% NaNO$_3$ + 5 Gew.-% Bentonit | $1,2 \cdot 10^{-13}$ | $1,5 \cdot 10^{-14}$ |
| PZ 35 F+ 40 Gew.-% NaNO$_3$ | $4,5 \cdot 10^{-12}$ | $2,7 . 10^{-13}$ |
| PZ 35 F+ 40 Gew.-% NaNO$_3$ + 5 Gew.-% Bentonit | $8,4 \cdot 10^{-15}$ | $1,0 \cdot 10^{-15}$ |

5

Das Ergebnis zeigt, daß die Auslaugbeständigkeit für Produkte ohne Bentonitzusatz vergleichbar ist, Proben mit hoher Salzbeladung und Bentonitzusatz weisen eine geringere Cs-Freisetzung auf.

Korrosionsbeständigkeit in quinärer Lösung

Als Maß für den Korrosionsfortschritt wird die Änderung der Dämpfung der Resonanzfrequenz bzw. die Änderung des dyn. E-Moduls (wird aus der Dämpfung berechnet) und die Gewichtsänderung der Proben herangezogen.

Tabelle 3

| Auslagerungszeit | | Probengewicht (g) | | E-Modul (N/mm$^2$) | |
|---|---|---|---|---|---|
| | | 10%Salz, W/Z=0,4 | 45% Salz, W/Z=0,25 | 10% Salz, | 45%Salz |
| 0 Tage | (PZ 35 F) | 61,8 | 65,4 | 18,5 | 23,0 |
| 5 Tage | | 58,0 | 65,7 | 14,0 | 17,0 |
| 15 Tage | | 60,0 | 66,3 | 13,5 | 16,0 |
| 50 Tage | | 61,0 | 66,3 | 13,0 | 14,5 |
| 90 Tage | | 61,0 | 66,2 | 12,5 | 13,5 |
| 0 Tage | (HOZ 35L) | 57,5 | 64,8 | 19,5 | 23,5 |
| 5 Tage | | 57,0 | 65,5 | 15,0 | 18,0 |
| 15 Tage | | 56,5 | 66,0 | 15,0 | 17,0 |
| 50 Tage | | 57,0 | 66,7 | 15,0 | 16,0 |
| 90 Tage | | 57,5 | 67,2 | 15,0 | 14,0 |

Aus den vorliegenden Meßwerten geht hervor, daß bei Proben aus PZ 35 F kaum Unterschiede, bei Proben aus HOZ 35 L nur geringe Unterschiede in der Korrosionsbeständigkeit bei unterschiedlicher Salzbeladung resultieren.

Beispiel 3

315 g MAW-Simulat (NaNO$_3$-haltig), gemäß Tabelle 1 in Beispiel 1, wurden mit 140 g PZ-Zement 35 F gemischt (W/Z = 1,6) und bei einer Ölbadtemperatur von 140 °C erhitzt. Hierbei wurden 180 g H$_2$O abgedampft (4 h). Die resultierende, plastische Mischung wurde mit 26 g Na$_2$SiO$_3$ · 5 H$_2$O versetzt und in Prismenformen abgefüllt. Die Proben zeigten normalen Erhärtungsverlauf. Der dyn. E-Modul nach 28 Tagen Härtezeit betrug 18 N/mm$^2$ und war vergleichbar mit dem von Produkten, hergestellt nach dem Stand der Technik. Die Zusammensetzung der erhaltenen Fixierungsprodukte war :

| | | |
|---|---|---|
| 30 | Gew.-% | Salz |
| 5 | Gew.-% | Na$_2$SiO$_3$ |
| 18,3 | Gew.-% | H$_2$O |
| 46,7 | Gew.-% | Zement |
| 100 | Gew.-% | Produkt |

W/Z = 0,4

Beispiel 4

380 g borathaltiges Simulat, entsprechend einem borathaltigen Abwasser aus einem Druckwasser-Kernreaktor gemäß Tabelle 4, wurden mit 175 g Zement gemischt und während 2 h 258 g H$_2$O bei einer Ölbadtemperatur von 140 °C abgedampft. Die resultierende, fließfähige Mischung wurde in Prismenformen abgefüllt und zeigte normalen Erhärtungsverlauf. Der dyn. E-Modul nach 28 Tagen betrug 16 N/mm$^2$. Die Zusammensetzung der Fixierungsprodukte war :

| | | |
|---|---|---|
| 30 | Gew.-% | Salz |
| 58,3 | Gew.-% | Zement |
| 11,7 | Gew.-% | $H_2O$ |
| 100,0 | Gew.-% | Produkt |

$W/Z = 0,20$

Besonders für die Borsäurekonzentrate stellt das erfindungsgemäße Verfahren eine einfache Lösung dar. Bisher mußte bei der Zementierung dieser Konzentrate der pH-Wert auf Werte von 11-12 eingestellt werden (mit NaOH oder $Ca(OH)_2$), um überhaupt feste Produkte zu erhalten. Durch diese Zusätze wurde die Qualität der Produkte beeinträchtigt. Durch das erfindungsgemäße Verfahren können Produkte ohne Zusätze hergestellt werden, die bei geringem W/Z -Wert eine bessere Qualität aufweisen.

Tabelle 4

| Konzentrationsangaben in ·g/l | |
|---|---|
| NaOH | 29 |
| $H_3BO_3$ | 180 |
| $Na_2SO_4$ | 30 |
| $Na_2HPO_4 \times 12H_2O$ | 5 |
| NaCl | 5 |
| $Fe_2(SO_4)_3$ | 5 |
| $Cs_2SO_4$ | 10 |
| Detergens (Haka Dekopur RS) | 5 |

**Patentansprüche**

1. Verfahren zur Herstellung von gegen Wasser und Salzlösungen auslaugresistenten Fixierungsprodukten von schädlichen wasserhaltigen Abfällen und Zement mit oder ohne Zusätze (Fixierungs-Matrix), bei welchem die wasserhaltigen Abfälle durch Eindampfen konzentriert werden und mit der Fixierungs-Matrix gemischt und fixiert werden, dadurch gekennzeichnet, daß der Eindampfvorgang und das Mischen gleichzeitig bei Temperaturen von 100 °C bis 180 °C durchgeführt werden, wobei

a) der Anteil des Abfalls im Endprodukt zwischen 20 und 50 Gew.- %, im Falle von mit Schadstoffen beladener Ionenaustauscher als Abfall zwischen 26 und 50 Gew.- %, bezogen auf das Trockengewicht des Abfalls, beträgt und

b) der Wassergehalt im Endprodukt einem Wasser-zu-Zement-Verhältnis im Bereich von 0,2 bis 0,45 entspricht.

2. Verfahren nach Anspruch 1, dadurch gekennzeichnet, daß die Dauer des Eindampfens und Mischens nach Maßgabe des Wassergehaltes im Endprodukt entsprechend einem Wasser-zu-Zement-Wert von 0,2 bis 0,45 eingestellt wird.

3. Verfahren nach Anspruch 1, dadurch gekennzeichnet, daß das Eindampfen und Mischen kontinuierlich in einer Durchlauf-Misch-Vorrichtung erfolgt.

4. Verfahren nach Anspruch 1, dadurch gekennzeichnet, daß das Eindampfen und Mischen diskontinuierlich in einem topfartigen Behältnis erfolgt.

5. Verfahren nach einem der Ansprüche 1 bis 4, dadurch gekennzeichnet, daß das Eindampfen und Mischen in Anwesenheit eines Abbindeverzögerers durchgeführt wird.

6. Verfahren nach einem der Ansprüche 1 bis 5, dadurch gekennzeichnet, daß das Eindampfen und Mischen unter Anwendung eines Vakuums im Bereich von 2 kPa bis 50 kPa (20 mbar bis 500 mbar) erfolgt.

**Claims**

1. Process for fabricating products resistant to leaching by water and brine for fixation of harmful water containing wastes and cement, with or without additions (fixation matrix), with the water containing wastes concentrated by evaporation and mixed with the fixation matrix and fixed, wherein the process of evaporation and mixing are performed simultaneously at temperatures of 100 °C to 180 °C, comprising

a) the content of the waste in the end product lying between 20 and 50 wt. % and in case of pollutant loaden ion exchangers as wastes between 26 and 50 wt. %, related to the dry weight of waste, and

b) the water content in the end product corresponding to a water-to-cement ratio of 0.2 to 0.45.

2. Process as defined in claim 1, wherein the duration of evaporation and mixing is set as a function of the water content in the end product corresponding to a water-to-cement ratio of 0.2 to 0.45.

3. Process as defined in claim 1, wherein evaporation and mixing are done continuously in a flow-mixing device.

4. Process as defined in claim 1, wherein evaporation and mixing are done in a pot shaped vessel.

5. Process as defined in one of claims 1 through 4, wherein evaporation and mixing are done in the presence of a setting delaying agent.

6. Process as defined in claims 1 through 5, wherein evaporation and mixing are done in a vacuum from 2 kPa to 50 kPa.

**Revendications**

1. Procédé pour la fabrication de produits de fixation résistants à la lixiviation vis-à-vis de l'eau et des solutions salines, de déchets nocifs contenant de l'eau et du ciment, avec ou sans additifs (matrice de fixation), dans lequel les déchets contenant de l'eau sont concentrés par évaporation et mélangés avec la matrice de fixation et fixés, procédé caractérisé en ce que l'opération d'évaporation et le mélange s'opèrent simultanément à des températures de 100 à 180 °C, pendant que

a) la proportion de déchets dans le produit final se monte entre 20 et 50 % en poids; dans le cas d'échangeurs d'ions chargés en substances nocives comme déchets entre 26 et 50 % en poids, calculé sur le poids sec du déchet, et

b) la teneur en eau du produit final correspond à un rapport entre l'eau et le ciment de l'ordre de 0,2 à 0,45.

2. Procédé suivant la revendication 1, caractérisé en ce que la durée de l'évaporation et du mélange est réglée pour que la proportion d'eau contenue dans le produit final corresponde à un rapport eau/ciment de 0,2 à 0,45.

3. Procédé suivant la revendication 1, caractérisé en ce que l'évaporation et le mélange s'effectuent en continu dans un appareil-mélangeur à passage.

4. Procédé suivant la revendication 1, caractérisé en ce que l'évaporation et le mélange s'effectuent par charges, dans une cuve en forme de pot.

5. Procédé suivant l'une des revendications 1 à 4, caractérisé en ce que l'évaporation et le mélange s'effectuent en présence d'un retardateur de prise.

6. Procédé suivant les revendications 1 à 5, caractérisé en ce que l'évaporation et le mélange s'effectuent en utilisant un vide de l'ordre de 2 à 50 kPa (20 à 500 mbars).

Fig. 1:  Vereinfachtes Fließschema

```
┌─────────────────────────────┐
│ MAW-Verdampfer-Kon-         │
│ zentrat                     │
│ 150 l/h                     │
├─────────────────────────────┤
│ Salze        30 kg/h        │
│ H₂O         140 kg/h        │
│      pH = ~ 9               │
└─────────────────────────────┘
```

$pH = \sim 9$

```
                              ┌──────────────┐
                              │ Zement       │
                              │ 24 kg/h      │
                              └──────────────┘

        ┌──────────────────────────┐
        │ Misch- und Eindampf-     │
        │ Vorrichtung              │
        └──────────────────────────┘

┌────────────────────┐
│ Kondensat          │
├────────────────────┤
│ H₂O 134kg/h        │
└────────────────────┘

        ┌──────────────────────────┐
        │ Fixierungsprodukt        │
        │    ca. 30 l/h            │
        ├──────────────────────────┤
        │ Salze        30 kg/h     │
        │ Zement       24 kg/h     │
        │ H₂O           6 kg/h     │
        └──────────────────────────┘
```